(19) **Europäisches Patentamt**
**European Patent Office**
**Office européen des brevets**

(11) **EP 4 099 227 A1**

(12) **EUROPEAN PATENT APPLICATION**

(43) Date of publication:
**07.12.2022 Bulletin 2022/49**

(21) Application number: **22157026.0**

(22) Date of filing: **16.02.2022**

(51) International Patent Classification (IPC):
**G06N 3/04** *(2006.01)*        **G06N 3/063** *(2006.01)*

(52) Cooperative Patent Classification (CPC):
**G06N 3/0445; G06N 3/0472; G06N 3/063**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021 JP 2021092271**

(71) Applicant: **FUJITSU LIMITED**
**Kawasaki-shi, Kanagawa 211-8588 (JP)**

(72) Inventor: **ISHIDA, Yuichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DATA PROCESSING APPARATUS, DATA PROCESSING METHOD, AND PROGRAM**

(57) A data processing apparatus that searches for a combination of values of a plurality of state variables by which a value of an Ising-type evaluation function including the plurality of state variables and a weight value. The data processing apparatus includes a storage unit and a processing unit. The storage unit stores group information indicating to which of a plurality of groups obtained by grouping the plurality of state variables each of the plurality of state variables belongs. The processing determines whether to allow a change in a value of each of a plurality of first state variables based on a comparison result between a predetermined value and a change amount of a value of the evaluation function, and changes, when it is determined in the first processing that a change in values of a plurality of second state variables is allowed, values of the plurality of second variables.

FIG. 1

**Description**

[Field]

The embodiments discussed herein are related to a data processing apparatus, a data processing method, and a program.

[Background Art]

As an apparatus that calculates a combinatorial optimization problem, which is one of large-scale discrete optimization problems which the Neumann-type computer is not good at, there is an Ising apparatus (also referred to as a Boltzmann machine) using an Ising-type evaluation function (also referred to as an energy function or the like).

The Ising apparatus converts a combinatorial optimization problem into an Ising model representing a behavior of spin of a magnetic material. The Ising apparatus searches for the state of the Ising model in which the value of an Ising-type evaluation function (equivalent to energy) is local minimum by a Markov chain Monte Carlo method such as a simulated annealing method or a replica exchange method (also referred to as a parallel tempering method or the like). A state in which the value of an evaluation function is the minimum value among local minimum values, is the optimal solution. By changing the sign of an evaluation function, the Ising apparatus may also search for a state in which the value of the evaluation function is local maximum. A state of an Ising model may be expressed by a combination of the values of a plurality of state variables. 0 or 1 may be used as the value of each state variable. For this reason, a state variable may also be referred to as a "bit".

For example, an Ising-type evaluation function is defined by the following Formula (1).

[Formula 1]

$$E = -\sum_{\langle i,j \rangle} W_{ij} x_i x_j - \sum_{i=1} b_i x_i + c \tag{1}$$

The first term on the right side adds up the products of the values of two state variables (0 or 1) and a weight value (indicating the degree of interaction between the two state variables) without omission and duplication for all combinations of all state variables of an Ising model. $x_i$ is a state variable with an identification number i, $x_j$ is a state variable with an identification number j, and $W_{ij}$ is a weight value indicating the degree of interaction between the state variables with the identification numbers i and j. The second term on the right side calculates a sum of the products of a bias coefficient and a state variable for each identification number. $b_i$ denotes a bias coefficient for the identification number = i. c is a constant.

An energy change amount ($\Delta E_i$) when the value of $x_i$ changes is represented by the following Formula (2).

[Formula 2]

$$\Delta E_i = -\Delta x_i \left( \sum_j W_{ij} x_j + b_i \right) = -\Delta x_i h_i \tag{2}$$

In Formula (2), $\Delta x_i$ is -1 when the state variable $x_i$ changes from 1 to 0, whereas $\Delta x_i$ is 1 when the state variable $x_i$ changes from 0 to 1. $h_i$ is referred to as a local field, and $\Delta E_i$ is a product of $h_i$ and a sign (+1 or -1) depending on $\Delta x_i$.

For example, the Ising apparatus determines whether or not to change the value of $x_i$ based on a result of comparison between $\Delta E_i$ and a noise value (also referred to as thermal noise) obtained based on a random number and a value of temperature parameter. For example, when $\Delta E_i$ is smaller than a noise value, the Ising apparatus causes state transition by updating the value of $x_i$. Hereinafter, changing (updating) the value of a state variable may be referred to as flipping. Determination of whether to change the value of a state variable may be referred to as flip determination.

Simultaneous flipping of a group of state variables having no interaction does not affect the convergence of calculation. For this reason, in the related art, there has been a technique of increasing the speed of calculation by allowing simultaneous flipping for a group of state variables having no interaction (having a weight value of 0) after performing flip determination for a plurality of state variables (PTL 1).

[Citation List]

[Patent Literature]

[PTL 1] Japanese Laid-open Patent Publication No. 2017-219952.

[Summary]

[Problem]

However, since the related art of allowing simultaneous flipping for a group of state variables having no interaction uses a weight value between state variables after flip determination, even a state variable that is allowed to be flipped may not be flipped depending on the weight value. In this case, calculation performed for flip determination ends up as useless calculation. For example, when the number of state variables for which the weight value with respect to $x_i$ is not 0 is n, $\Sigma_i r_i$ (i = 1 to n when the total number of state variables is n) times of useless calculation occurs per one time of flip determination.

According to one aspect, the present disclosure aims to provide a data processing apparatus, a data processing method, and a program that may shorten calculation time of a combinatorial optimization problem.

[Solution to Problem]

According to one embodiment, a data processing apparatus is provided, the data processing apparatus searches for a combination of values of a plurality of state variables by which a value of an Ising-type evaluation function including the plurality of state variables and a weight value indicating a degree of interaction between the plurality of state variables is local minimum or local maximum. The data processing apparatus includes a storage unit configured to store group information indicating to which of a plurality of groups obtained by grouping the plurality of state variables such that an absolute value of the weight value is equal to or smaller than a threshold value each of the plurality of state variables belongs; and a processing unit configured to: execute first processing of determining whether to allow a change in a value of each of a plurality of first state variables that belong to a first group and is selected based on the group information from among the plurality of state variables, based on a comparison result between a predetermined value and a change amount of a value of the evaluation function in a case where a value of each of the plurality of first state variables is changed, and execute, when it is determined in the first processing that a change in values of a plurality of second state variables among the plurality of first state variables is allowed, second processing of changing values of the plurality of second state variables.

Further, According to one embodiment, a data processing method is provided.

Further, According to one embodiment, a program is provided.

[Effects of Invention]

According to one aspect, the present disclosure may shorten calculation time of a combinatorial optimization problem.

[Brief Description of Drawings]

FIG. 1 is a diagram illustrating an example of a data processing apparatus and a data processing method according to a first embodiment;
FIG. 2 is a block diagram illustrating an example of hardware of a data processing apparatus according to a second embodiment;
FIG. 3 is a block diagram illustrating an example of functions of the data processing apparatus;
FIG. 4 is a diagram illustrating an example of group information;
FIG. 5 is a flowchart illustrating an example of a flow of grouping processing;
FIG. 6 is a flowchart illustrating an example of a flow of correction processing of grouping;
FIG. 7 is a flowchart illustrating an example of a flow of threshold determination processing;
FIG. 8 is a flowchart illustrating an example of a flow of search processing;
FIG. 9 is a diagram illustrating an example of a data processing apparatus according to a third embodiment;
FIG. 10 is a diagram illustrating a first example of a field-programmable gate array (FPGA);

FIG. 11 is a timing diagram illustrating an example of operation timing of each unit of the FPGA;

FIG. 12 is a diagram illustrating a second example of the FPGA;

FIG. 13 is a diagram illustrating a third example of the FPGA; and

FIG. 14 is a diagram illustrating a modification example of the data processing method.

[Description of Embodiments]

Hereinafter, the embodiments of the present disclosure will be described with reference to the drawings.

(First Embodiment)

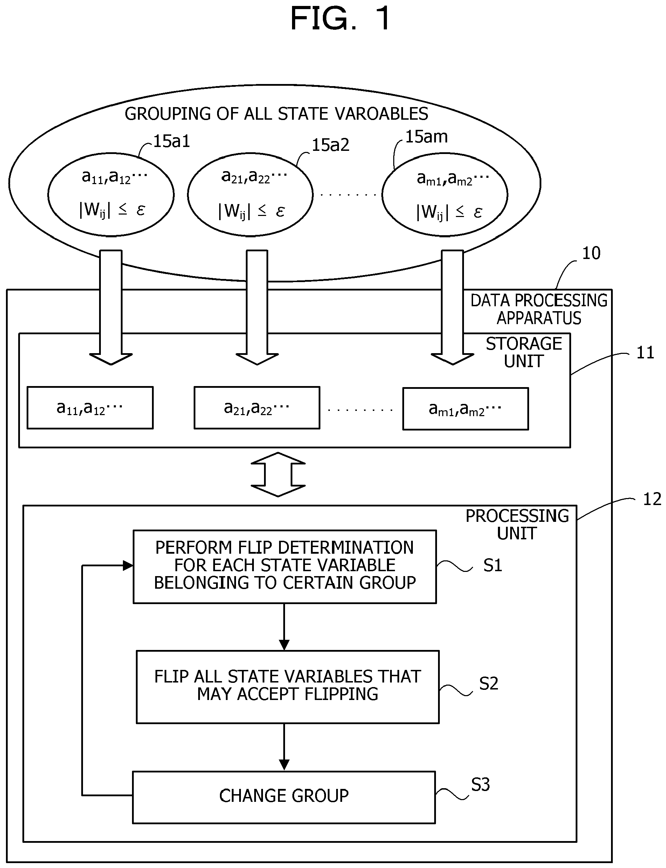

FIG. 1 is a diagram illustrating an example of a data processing apparatus and a data processing method according to the first embodiment.

A data processing apparatus 10 of the first embodiment includes a storage unit 11 and a processing unit 12.

For example, the storage unit 11 is a volatile storage device that is an electronic circuit such as a dynamic random-access memory (DRAM) or a non-volatile storage device that is an electronic circuit such as a hard disk drive (HDD) or a flash memory. The storage unit 11 may include an electronic circuit such as a register.

The storage unit 11 stores group information indicating to which of a plurality of groups each of a plurality of state variables grouped in advance belongs.

A plurality of state variables included in the Ising-type evaluation function represented by Formula (1) are grouped such that an absolute value of a weight value is equal to or smaller than a threshold.

FIG. 1 illustrates an example in which all state variables are grouped into m groups of 15a1, 15a2, ..., and 15am. $a_{11}, a_{12}, ..., a_{21}, a_{22}, ...,$ and $a_{m1}, a_{m2}, ...$ indicate an example of group information. $a_{11}, a_{12}, ...$ represent identification numbers of state variables belonging to the group 15a1, $a_{21}, a_{22}, ...$ represent identification numbers of state variables belonging to the group 15a2, and $a_{m1}, a_{m2}, ...$ represent identification numbers of state variables belonging to the group 15am.

An absolute value of a weight value ($|W_{ij}|$) between a plurality of state variables included in each of the groups 15a1 to 15am is equal to or smaller than a threshold ($\varepsilon$). For example, $\varepsilon$ is designated by the following two methods before grouping processing to be described later.

For example, the first designation method is a method in which $\varepsilon$ is directly designated by a user. For example, an average value (ave.($|W_{ij}|$)) of the absolute values of all weight values included in the Ising-type evaluation function represented by Formula (1) may be designated as $\varepsilon$. ave.($|W_{ij}|$) - 3sdv.($|W_{ij}|$) obtained by subtracting a triplication of a standard deviation of $|W_{ij}|$ (sdv.($|W_{ij}|$)) from ave.($|W_{ij}|$) may be designated as $\varepsilon$. Alternatively, among the absolute values of all weight values included in the Ising-type evaluation function, 0.01 times the maximum value, 2 times the minimum value, 0.1 times the difference between the maximum value and the minimum value, or the like may be designated as $\varepsilon$.

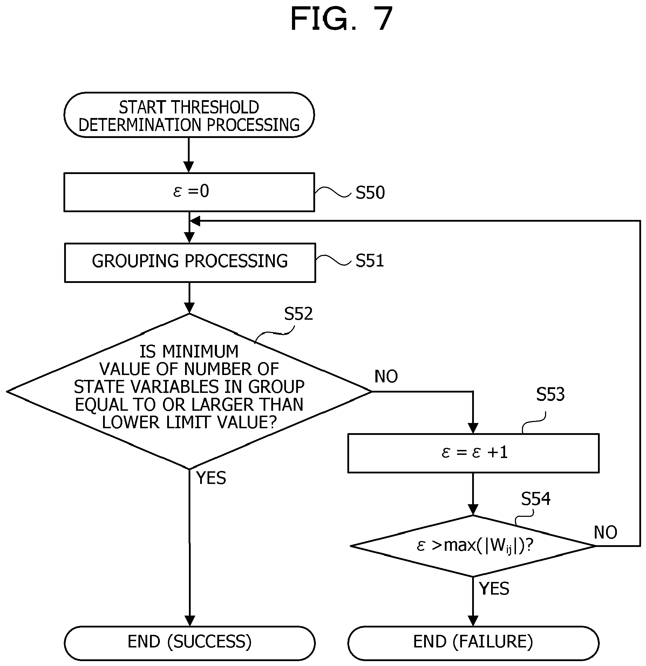

The second designation method is a method in which, when a lower limit value of the number of state variables belonging to each group is designated, $\varepsilon$ is designated so as to satisfy the lower limit value. Details of this method will be described later (refer to FIG. 7).

For example, as illustrated in FIG. 1, the identification numbers of the plurality of state variables grouped as described above are stored in the storage unit 11 for each group as $a_{11}, a_{12}, ..., a_{21}, a_{22}, ..., a_{m1}, a_{m2}, ...,$ and the like.

The storage unit 11 may store various types of data such as calculation conditions under which the processing unit 12 executes a data processing method (calculation of a combinatorial optimization problem) to be described later. For example, the storage unit 11 may store $W_{ij}$, $b_i$, and c included in the Ising-type evaluation function represented by Formula (1), the initial value of each state variable, and the like. When the processing unit 12 executes a part or all of processing of the data processing method to be described later by software, a program for executing the processing is stored in the storage unit 11.

For example, the processing unit 12 may be realized by a processor that is hardware such as a central processing unit (CPU), a graphics processing unit (GPU), or a digital signal processor (DSP). The processing unit 12 may also be realized by an electronic circuit such as an application-specific integrated circuit (ASIC) or a field-programmable gate array (FPGA).

For example, the processing unit 12 searches for an allocation state in which the value (energy) of the evaluation function represented by Formula (1) is local minimum. A state in which the value of the evaluation function is the minimum value among local minimum values, is the optimal solution. By changing the sign of the evaluation function represented by Formula (1), the processing unit 12 may also search for a state in which the value of the evaluation function is local maximum (in this case, a state in which the value of the evaluation function is the maximum value is the optimal solution).

FIG. 1 illustrates a part of a flow of processing performed by the processing unit 12.

Step S1: For each of a plurality of state variables belonging to a certain group selected based on group information, the processing unit 12 performs flip determination.

For example, first, the processing unit 12 performs flip determination for each of the plurality of state variables belonging to the group 15a1. In this case, a weight value to be used for calculation is selected based on the identification numbers represented as $a_{11}$, $a_{12}$, ..., and $\Delta E_i$ represented by Formula (2) is calculated. For example, when the number of state variables included in the evaluation function is n and $a_{11} = 1$, $W_{11}$ to $W_{1n}$ are used and $\Delta E_1$ is calculated. Based on a result of comparison between $\Delta E_1$ and a predetermined value, the processing unit 12 determines whether to allow flipping of $x_1$. For example, the predetermined value is a noise value obtained based on a random number and a value of temperature parameter. For example, when $\Delta E_1$ is smaller than $\log(rand) \times T$, which is an example of a noise value obtained based on a uniform random number (rand) equal to or larger than 0 and equal to or smaller than 1 and a temperature parameter (T), the processing unit 12 determines to allow flipping of $x_1$. Similar processing is performed for other state variables belonging to the group 15a1 represented by the group information other than $a_{11}$.

Step S2: The processing unit 12 flips all the state variables that are allowed to be flipped (indicated in FIG. 1 as state variables that may accept flipping) by the processing of step S1 among the plurality of state variables belonging to a certain group.

By causing the plurality of state variables that are simultaneously flipped to have the absolute value of the weight value ($|W_{ij}|$) equal to or smaller than a threshold ($\varepsilon$), the convergence of calculation may be less affected. By using a smaller threshold, the convergence of calculation is further less affected. However, since the number of state variables belonging to one group may decrease and the number of state variables that may be simultaneously flipped may decrease as a threshold is made smaller, it is desirable that a threshold is determined in accordance with requested calculation accuracy, calculation time, or the like.

Step S3: The processing unit 12 changes a group to be processed. After that, the processing from step S1 is repeated.

For example, when the simulated annealing method is performed, the processing unit 12 decreases the value of temperature parameter (T) described above in accordance with a predetermined temperature parameter change schedule every time flip determination processing is repeated a predetermined number of times. The processing unit 12 outputs a state obtained when the above flip determination processing is repeated a predetermined number of times (the value of each state variable), as a calculation result of a combinatorial optimization problem (for example, displays the state on a display device (not illustrated)). Every time flipping occurs, the processing unit 12 may update the value (energy) of the evaluation function represented by Formula (1), and hold the energy and the state obtained when the energy is the minimum energy up to that time. In this case, the processing unit 12 may output, as a calculation result, a state corresponding to the minimum energy stored after the above flip determination processing is repeated a predetermined number of times.

When the processing unit 12 performs the replica exchange method, the processing unit 12 performs the above flip determination processing in each of a plurality of replicas in which different values of temperature parameters are set. The processing unit 12 performs replica exchange every time the above flip determination processing is repeated a predetermined number of times. For example, the processing unit 12 randomly selects two replicas from among a plurality of replicas, and exchanges the values of temperature parameters or states between the two selected replicas with a predetermined exchange probability based on an energy difference between the replicas or a difference in the values of temperature parameters between the replicas. For example, every time flipping occurs in each replica, the processing unit 12 updates the value (energy) of the evaluation function represented by Formula (1), and holds the energy and the state obtained when the energy is the minimum energy up to that time. The processing unit 12 outputs, as a calculation result, a state corresponding to the minimum energy in all replicas among the minimum energies stored after the above flip determination processing is repeated a predetermined number of times in each replica.

According to the data processing apparatus 10 and the data processing method described above, after flipping is allowed in flip determination, a plurality of state variables belonging to the same group for which the absolute value of the weight value is equal to or smaller than the threshold are simultaneously flipped without the flipping being rejected. Accordingly, since useless calculation does not occur, calculation time may be shortened.

Since useless calculation does not occur, energy efficiency at the time of calculation is improved, and power consumption for calculation may be reduced.

Not only a plurality of state variables having no interaction ($W_{ij} = 0$), but also a plurality of state variables having interaction may be simultaneously flipped as long as the absolute value of the weight value is equal to or smaller than a threshold. For this reason, such a data processing method as described above is also effective for a problem such as binary quadratic programing (BQP) in which the number of state variables having no interaction is small.

(Second Embodiment)

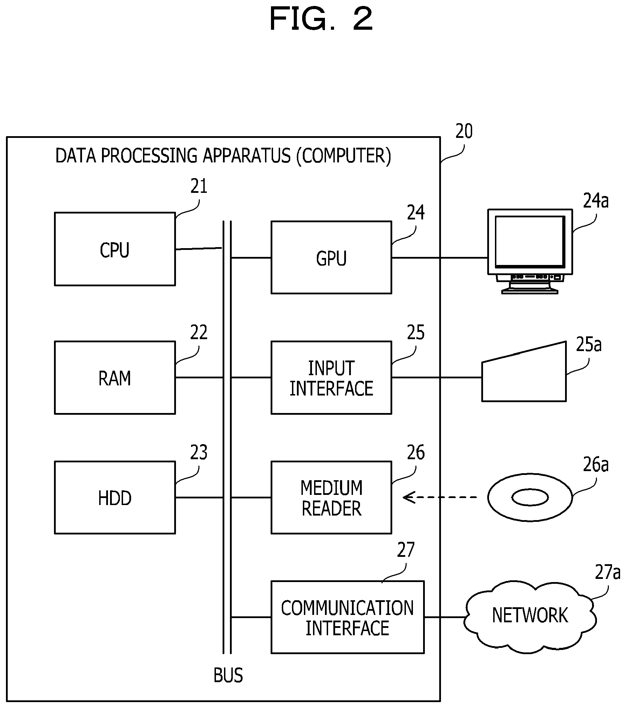

FIG. 2 is a block diagram illustrating an example of hardware of a data processing apparatus according to the second embodiment.

For example, a data processing apparatus 20 is a computer, and includes a CPU 21, a random-access memory (RAM) 22, an HDD 23, a GPU 24, an input interface 25, a medium reader 26, and a communication interface 27. The above units are coupled to a bus.

The CPU 21 is a processor including an arithmetic circuit that executes program instructions. The CPU 21 loads at least a part of a program and data stored in the HDD 23 into the RAM 22, and executes the program. The CPU 21 may include a plurality of processor cores, the data processing apparatus 20 may include a plurality of processors, and the processing to be described below may be executed in parallel by using the plurality of processors or processor cores. A set of a plurality of processors (multiprocessor) may be referred to as a "processor".

The RAM 22 is a volatile semiconductor memory that temporarily stores a program executed by the CPU 21 or data used for computation by the CPU 21. The data processing apparatus 20 may include a memory of a type other than the RAM 22, and may include a plurality of memories.

The HDD 23 is a non-volatile storage device that stores a program of software such as an operating system (OS), middleware, and application software, and data. For example, the program includes a program for causing the data processing apparatus 20 to execute a process of searching for a solution of a combinatorial optimization problem. The data processing apparatus 20 may include another type of storage device such as a flash memory or a solid-state drive (SSD), and may include a plurality of non-volatile storage devices.

The GPU 24 outputs an image to a display 24a coupled to the data processing apparatus 20 in accordance with instructions from the CPU 21. As the display 24a, a cathode ray tube (CRT) display, a liquid crystal display (LCD), a plasma display panel (PDP), an organic electro-luminescence (OEL) display, or the like may be used.

The input interface 25 acquires an input signal from an input device 25a coupled to the data processing apparatus 20 and outputs the acquired input signal to the CPU 21. As the input device 25a, a pointing device such as a mouse, a touch panel, a touchpad, or a trackball, a keyboard, a remote controller, a button switch, or the like may be used. A plurality of types of input devices may be coupled to the data processing apparatus 20.

The medium reader 26 is a reading device that reads a program or data recorded on a recording medium 26a. As the recording medium 26a, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 26 copies a program or data read from the recording medium 26a to another recording medium such as the RAM 22 or the HDD 23. For example, the read program is executed by the CPU 21. The recording medium 26a may be a portable type recording medium, and may be used to distribute a program or data. The recording medium 26a and the HDD 23 may be referred to as a computer-readable recording medium.

The communication interface 27 is an interface that is coupled to a network 27a and that performs communication with another information processing apparatus via the network 27a. The communication interface 27 may be a wired communication interface coupled to a communication device such as a switch via a cable, or may be a wireless communication interface coupled to a base station via a wireless link.

Next, functions and processing procedures of the data processing apparatus 20 will be described.

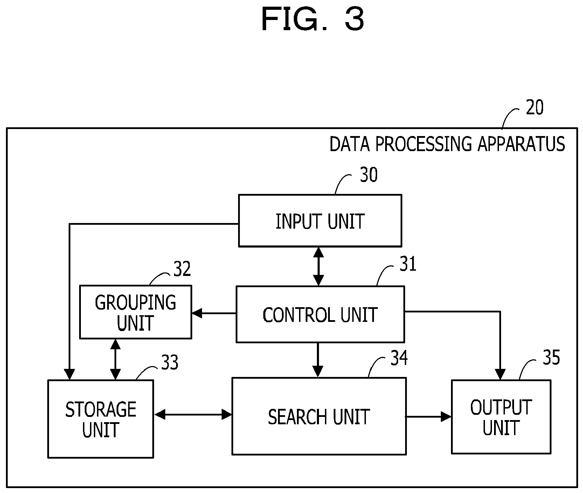

FIG. 3 is a block diagram illustrating an example of functions of the data processing apparatus.

The data processing apparatus 20 includes an input unit 30, a control unit 31, a grouping unit 32, a storage unit 33, a search unit 34, and an output unit 35.

For example, the input unit 30, the control unit 31, the grouping unit 32, the search unit 34, and the output unit 35 may be implemented by using a program module executed by the CPU 21. For example, the storage unit 33 may be implemented by using a storage area secured in the RAM 22 or the HDD 23.

For example, the input unit 30 receives input of problem information ($W_{ij}$, $b_i$, and c of Formula (1)) and calculation conditions (for example, a threshold ($\varepsilon$) for grouping, information for changing a temperature parameter (T), the maximum number of times of flip determination, and the like). These pieces of information may be input by a user operating the input device 25a, or may be input via the recording medium 26a or the network 27a.

The control unit 31 controls each unit of the data processing apparatus 20, and causes each unit to execute processing to be described later.

The grouping unit 32 groups a plurality of state variables such that $|W_{ij}| \leq \varepsilon$ is satisfied based on the weight value ($W_{ij}$) included in the Ising-type evaluation function, and generates group information indicating a result of the grouping.

The storage unit 33 stores weight values and group information. The storage unit 33 may store various types of information such as other problem information, calculation conditions, values of n state variables, and calculation results of energy.

The search unit 34 searches for a state in which the value of an evaluation function (energy) is local minimum by repeating the processing of performing flip determination and flipping the state variables that are allowed to be flipped.

For example, the output unit 35 outputs, as calculation results, the value of each state variable included in the evaluation function obtained after the search processing is performed a predetermined number of times and the value of the evaluation function at that time. For example, the output unit 35 may output and display the calculation results on the display 24a, may transmit the calculation results to another information processing apparatus via the network 27a, or may store the calculation results in an external storage device.

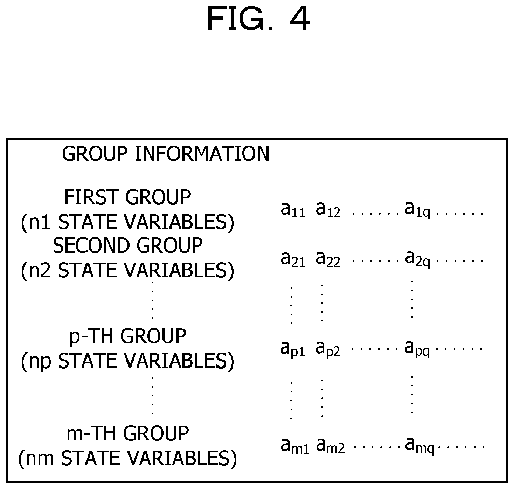

FIG. 4 is a diagram illustrating an example of group information. FIG. 4 illustrates an example of group information in a case of state variables being grouped into m groups.

For example, $a_{11}$, $a_{12}$, ..., $a_{1q}$, ... represent identification numbers of $n_1$ state variables belonging to the first group, and $a_{1q}$ represents the identification number of a q-th state variable belonging to the first group. $a_{p1}$, $a_{p2}$, ..., $a_{pq}$, ... represent identification numbers of $n_p$ state variables belonging to a p-th group, and $a_{pq}$ represents the identification number of a q-th state variable belonging to the p-th group.

Hereinafter, processing procedures of the data processing apparatus 20 will be described. First, the data processing apparatus 20 performs grouping processing as described below.

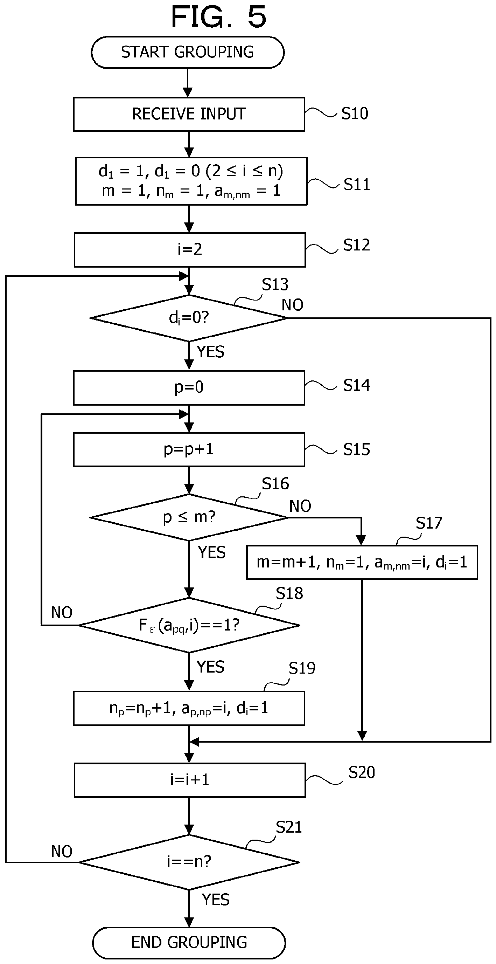

FIG. 5 is a flowchart illustrating an example of a flow of grouping processing.

Step S10: The input unit 30 receives input of problem information ($W_{ij}$, $b_i$, and c of Formula (1)) and calculation conditions (for example, a threshold ($\varepsilon$) for grouping, information for changing a temperature parameter (T), the maximum number of times of flip determination, and the like). Hereinafter, description will be given on the assumption that the number of state variables included in the evaluation function of Formula (1) is n.

Step S11: The grouping unit 32 sets $d_1$ = 1, $d_i$ = 0, m = 1, $n_m$ = 1, and $a_{m,\,nm}$ = 1. nm of $a_{m,\,nm}$ indicates $n_m$ (the number of state variables belonging to the m-th group). $d_i$ is a variable indicating whether the state variable ($x_i$) with the identification number = i ($2 \leq i \leq n$) is classified into any group. $d_i$ = 0 indicates that $x_i$ is not classified into any group, and $d_i$ = 1 indicates that $x_i$ is classified into any group. $d_1$ = 1 indicates that $x_1$ is classified into a certain group (first group). Because of a state in which there is only the first group and only $x_1$ belongs to the first group at the beginning, the number of groups (m) is set m = 1 and $n_m$ = 1. The reason why $a_{m,\,nm}$ = 1 is because the identification number of the state variable ($x_1$) belonging to the first group is 1.

Step S12: The grouping unit 32 sets i = 2.

Step S13: The grouping unit 32 determines whether or not it is $d_i$ = 0. When it is determined that it is $d_i$ = 0, the grouping unit 32 performs the processing of step S14. When it is determined that it is not $d_i$ = 0, the grouping unit 32 performs the processing of step S20.

Step S14: The grouping unit 32 sets p = 0. p is a group number.

Steps S15 and S16: The grouping unit 32 sets p = p + 1, and determines whether it is p $\leq$ m. When it is determined that it is p $\leq$ m, the grouping unit 32 performs the processing of step S18. When it is determined that it is not p $\leq$ m, the grouping unit 32 performs the processing of step S17.

Step S17: The grouping unit 32 sets m = m + 1, $n_m$ = 1, $a_{m,\,nm}$ = i, and $d_i$ = 1. In the processing of step S17, the state variable with the identification number = i is classified into the next group. After the processing of step S17, the processing of step S20 is performed.

Step S18: The grouping unit 32 determines whether or not $F_{\varepsilon}(a_{pq}, i)$ is 1 for each of q = 1, ..., $n_p$. $F_{\varepsilon}(a_{pq}, i)$ is a function that is 1 when the weight value between the state variable with the identification number = $a_{pq}$ and the state variable with the identification number = i is equal to or smaller than $\varepsilon$, and is 0 when the weight value is larger than $\varepsilon$. When it is determined that $F_{\varepsilon}(a_{pq}, i)$ is 1 for each of q = 1, ..., $n_p$, the grouping unit 32 performs the processing of step S19. When it is determined that $F_{\varepsilon}(a_{pq}, i)$ is not 1 for each of q = 1, ..., $n_p$, the grouping unit 32 returns to the processing of step S15.

Step S19: The grouping unit 32 sets $n_p$ = $n_p$ + 1, $a_{p,\,np}$ = i, and $d_i$ = 1. np of $a_{p,\,np}$ indicates $n_p$. In the processing of step S19, the state variable with the identification number = i is classified as the $n_p$-th state variable of the p-th group.

Steps S20 and S21: The grouping unit 32 sets i = i + 1, and then determines whether i has reached n. When it is determined that i has not reached n, the grouping unit 32 repeats the processing from step S13. When it is determined that i has reached n, the grouping unit 32 ends the grouping processing.

By the above-described processing, each of the n state variables included in the evaluation function of Formula (1) is classified into any of the groups, and $a_{m,\,nm}$ and $a_{p,\,np}$ are stored in the storage unit 33 as group information.

After the grouping, the grouping unit 32 may perform correction of the grouping as described below so that the numbers of state variables belonging to the groups are equal among the groups to the extent possible.

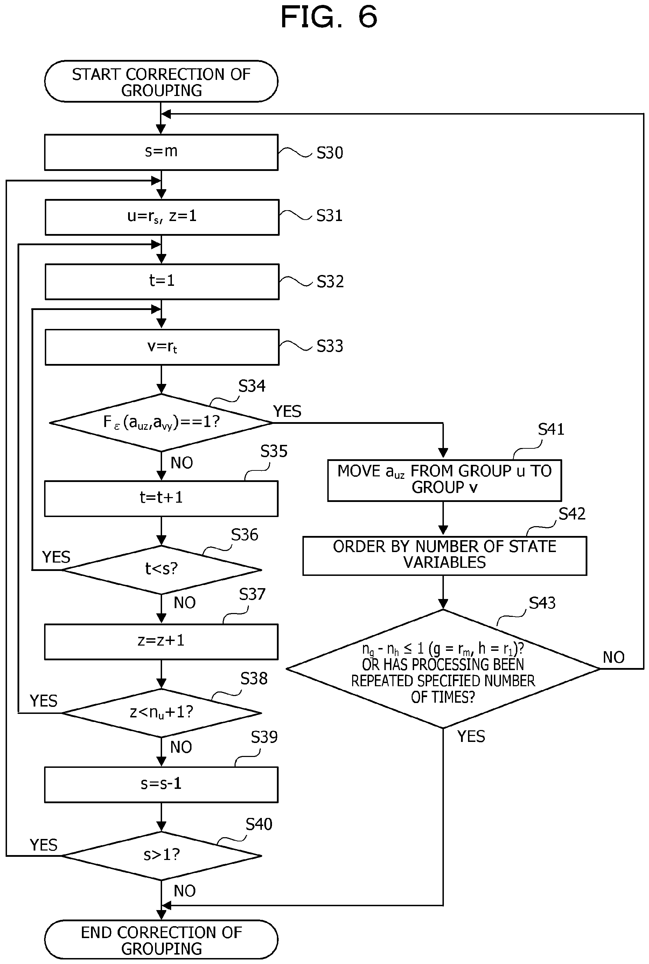

FIG. 6 is a flowchart illustrating an example of a flow of correction processing of grouping.

Step S30: m groups are ordered by the number of state variables belonging to each group. In a case where there are two groups to which the same number of state variables belong, ordering may be performed by assuming that the number of state variables belonging to one of the groups is small.

First, the grouping unit 32 sets s = m. s indicates an order of a group when the m groups are arranged in ascending order of the number of state variables belonging to each group. Since m is the number of groups, a group to which the largest number of state variables belong is designated first.

Step S31: The grouping unit 32 sets a variable u and a variable z as u = $r_s$ and z = 1. $r_s$ is an identification number of an s-th group when the groups are arranged in ascending order of the number of state variables belonging to each group.

Steps S32 and S33: The grouping unit 32 sets a variable t and a variable v as t = 1 and v = $r_t$. $r_t$ is an identification number of a t-th group when the groups are arranged in ascending order of the number of state variables belonging to each group.

Step S34: The grouping unit 32 determines whether $F_\varepsilon(a_{uz}, a_{vy})$ is 1 for each of y = 1, ..., $n_v$. $F_\varepsilon(a_{uz}, a_{vy})$ is a function that is 1 when the weight value between the state variable with the identification number = $a_{uz}$ and the state variable with the identification number = $a_{vy}$ is equal to or smaller than $\varepsilon$, and is 0 when the weight value is larger than $\varepsilon$. When it is determined that $F_\varepsilon(a_{uz}, a_{vy})$ is 1 for each of y = 1, ..., $n_v$, the grouping unit 32 performs the processing of step S41. When it is determined that $F_\varepsilon(a_{uz}, a_{vy})$ is not 1 for each of y = 1, ..., $n_v$, the grouping unit 32 performs the processing of step S35.

Steps S35 and S36: The grouping unit 32 sets t = t + 1, and determines whether or not it is t < s. When it is determined that it is t < s, the grouping unit 32 returns to the processing of step S33. When it is determined that it is not t < s, the grouping unit 32 performs the processing of step S37.

Steps S37 and S38: The grouping unit 32 sets z = z + 1, and determines whether it is z < $n_u$ + 1. When it is determined that it is z < $n_u$ + 1, the grouping unit 32 returns to the processing of step S32. When it is determined that it is not z < $n_u$ + 1, the grouping unit 32 performs the processing of step S39.

Steps S39 and S40: The grouping unit 32 sets s = s - 1, and determines whether it is s > 1. When it is determined that it is s > 1, the grouping unit 32 returns to the processing of step S31. When it is determined that it is not s > 1, the grouping unit 32 ends the correction processing of grouping.

Step S41: The grouping unit 32 moves the state variable with the identification number = $a_{uz}$ from the group with the identification number = u to the group with the identification number = v.

Step S42: The grouping unit 32 performs ordering of the m groups again by the number of state variables belonging to each group, following the movement of the state variable with the identification number = $a_{uz}$ from the group with the identification number = u to the group with the identification number = v.

Step S43: The grouping unit 32 determines whether or not it is $n_g - n_h \leq 1$ (g = $r_m$, h = $r_1$), and whether the processing from step S30 has been repeated a specified number of times. When it is determined that it is $n_g - n_h \leq 1$ or that the processing from step S30 has been repeated a specified number of times, the grouping unit 32 ends the correction processing of grouping. When it is determined that it is not $n_g - n_h \leq 1$ and that the processing from step S30 has not been repeated a specified number of times, the grouping unit 32 repeats the processing from step S30.

By the above correction processing of grouping, the numbers of state variables belonging to the groups are equalized among the groups, and generation of a group in which the number of state variables belonging to that group is too small is suppressed. Accordingly, a decrease in the number of state variables that are allowed to be simultaneously flipped is suppressed, and it is possible to avoid a situation in which an effect of shortening the calculation time by simultaneous flipping of a plurality of state variables is impaired.

When a lower limit value of the number of state variables belonging to each group is designated, the grouping unit 32 may determine a threshold ($\varepsilon$) for grouping so as to satisfy the lower limit value.

FIG. 7 is a flowchart illustrating an example of a flow of threshold determination processing.

Step S50: First, the grouping unit 32 sets $\varepsilon$ = 0.

Step S51: The grouping unit 32 performs the grouping processing illustrated in FIG. 5 using $\varepsilon$. The grouping unit 32 may perform the correction processing of grouping illustrated in FIG. 6 in addition to the grouping processing illustrated in FIG. 5.

Step S52: For the m groups, the grouping unit 32 determines whether or not the minimum value of the number of state variables in each group is equal to or larger than a predetermined lower limit value. When it is determined that the minimum value of the number of state variables in each group is equal to or larger than the predetermined lower limit value, the grouping unit 32 ends the threshold determination processing. In this case, a threshold is appropriately determined (success). When it is determined that the minimum value of the number of state variables in each group is not equal to or larger than the predetermined lower limit value, the grouping unit 32 performs the processing of step S53.

Steps S53 and S54: The grouping unit 32 sets $\varepsilon$ = $\varepsilon$ + 1, and then determines whether it is $\varepsilon$ > max($|W_{ij}|$). A value by which $\varepsilon$ is increased is not limited to 1. When it is determined that it is $\varepsilon$ > max($|W_{ij}|$), the grouping unit 32 ends the threshold determination processing. In this case, a threshold is not appropriately determined (failure). When it is determined that it is not $\varepsilon$ > max($|W_{ij}|$), the grouping unit 32 repeats the processing from step S51.

When a threshold is not appropriately determined, there is a possibility that the threshold may be appropriately determined by adding a value smaller than 1 to $\varepsilon$ instead of adding 1 to $\varepsilon$ in the processing of step S53, by changing a lower limit value since there is a possibility that the lower limit value is not appropriate, or by taking other measures.

By the above threshold determination processing, generation of a group in which the number of state variables belonging to that group is too small is suppressed, a decrease in the number of state variables that are allowed to be simultaneously flipped is suppressed, and it is possible to avoid a situation in which an effect of shortening the calculation time by simultaneous flipping of a plurality of state variables is impaired.

Next, search processing by the data processing apparatus 20 will be described.

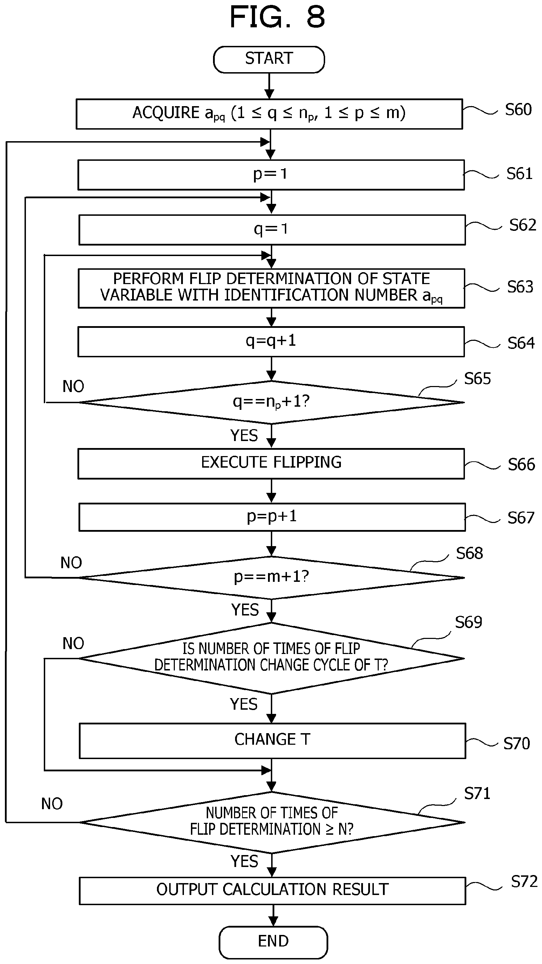

FIG. 8 is a flowchart illustrating an example of a flow of the search processing.

Step S60: The search unit 34 acquires group information ($a_{pq}(1 \leq q \leq n_p, 1 \leq p \leq m)$) stored in the storage unit 33.

Step S61: The search unit 34 sets p = 1.

Step S62: The search unit 34 sets q = 1.

Step S63: The search unit 34 performs flip determination of the state variable with the identification number = $a_{pq}$. For example, the search unit 34 reads, from the storage unit 33, a weight value to be used for calculation of an energy change amount of a case where the state variable identified by $a_{pq}$ is flipped. By using Formula (2), the search unit 34 calculates the energy change amount of a case where the state variable with the identification number = $a_{pq}$ is flipped. When the calculated change amount is smaller than a noise value, the search unit 34 allows flipping of the state variable with the identification number = $a_{pq}$. When the change amount is equal to or larger than the noise value, the search unit 34 does not allow the flipping.

For example, when $a_{pq} = i$, $W_{i1}$ to $W_{in}$ are read out, and $\Delta E_i$ is calculated by Formula (2). For example, when $\Delta E_i$ is smaller than $\log(rand) \times T$, which is an example of a noise value obtained based on a uniform random number (rand) equal to or larger than 0 and equal to or smaller than 1 and a temperature parameter (T), the search unit 34 allows flipping of $x_i$.

Steps S64 and S65: The search unit 34 sets q = q + 1, and then determines whether q is $n_p$ + 1. When it is determined that q is $n_p$ + 1, the search unit 34 performs the processing of step S66. When it is determined that q is not $n_p$ + 1, the search unit 34 repeats the processing from step S63.

Step S66: By the processing of steps S63 to S65, the search unit 34 flips all the state variables that are allowed to be flipped.

Steps S67 and S68: The search unit 34 sets p = p + 1, and then determines whether or not p is m + 1. When it is determined that p is not m + 1, the search unit 34 repeats the processing from step S62. When it is determined by the search unit 34 that p is m + 1, the processing of step S69 is performed.

Step S69: The control unit 31 determines whether or not the number of times of flip determination is a change cycle of temperature parameter (T). When it is determined that the number of times of flip determination is the change cycle of T, the control unit 31 performs the processing of step S70. When it is determined that the number of times of flip determination is not the change cycle of T, the control unit 31 performs the processing of step S71.

Step S70: The control unit 31 changes (decreases) the value of T. For example, the control unit 31 decreases T by multiplying T by a temperature decay rate $\alpha$ (for example, 0.99).

Step S71: The control unit 31 determines whether or not the number of times of flip determination is equal to or larger than a predetermined number of times (N in the example of FIG. 8). When it is determined that the number of times of flip determination is not equal to or larger than the predetermined number of times, the control unit 31 repeats the processing from step S61. When it is determined that the number of times of flip determination is equal to or larger than the predetermined number of times, the control unit 31 performs the processing of step S72.

Step S72: For example, the control unit 31 causes the output unit 35 to output the current values of n state variables as calculation results. This ends the search processing.

The order of processing illustrated in FIGs. 5 to 8 is an example. The order of processing may be changed as appropriate.

In the data processing apparatus 20 and the data processing method according to the second embodiment described above, similar effects to those of the data processing apparatus 10 and the data processing method according to the first embodiment may be obtained. For example, after flipping is allowed in flip determination, a plurality of state variables belonging to the same group for which the absolute value of the weight value is equal to or smaller than $\varepsilon$ are simultaneously flipped without the flipping being rejected. For this reason, since useless calculation does not occur, calculation time may be shortened. Since useless calculation does not occur, energy efficiency at the time of calculation is improved, and power consumption for calculation may be reduced.

By correction of grouping or determination of $\varepsilon$ by the processing illustrated in FIGs. 6 and 7, for the above-described reason, it is possible to avoid a situation in which an effect of shortening the calculation time by simultaneous flipping of a plurality of state variables is impaired.

As described above, the above details of processing may be achieved by causing the data processing apparatus 20 to execute a program.

The program may be recorded in a computer-readable recording medium (for example, the recording medium 26a). As the recording medium, for example, a magnetic disk, an optical disk, a magneto-optical disk, a semiconductor memory, or the like may be used. The magnetic disk includes an FD and an HDD. The optical disk includes a CD, a CD-recordable (R)/rewritable (RW), a DVD, and a DVD-R/RW. The program may be recorded in a portable recording medium and distributed. In this case, the program may be copied from the portable recording medium to another recording medium (for example, the HDD 23) and executed.

(Third Embodiment)

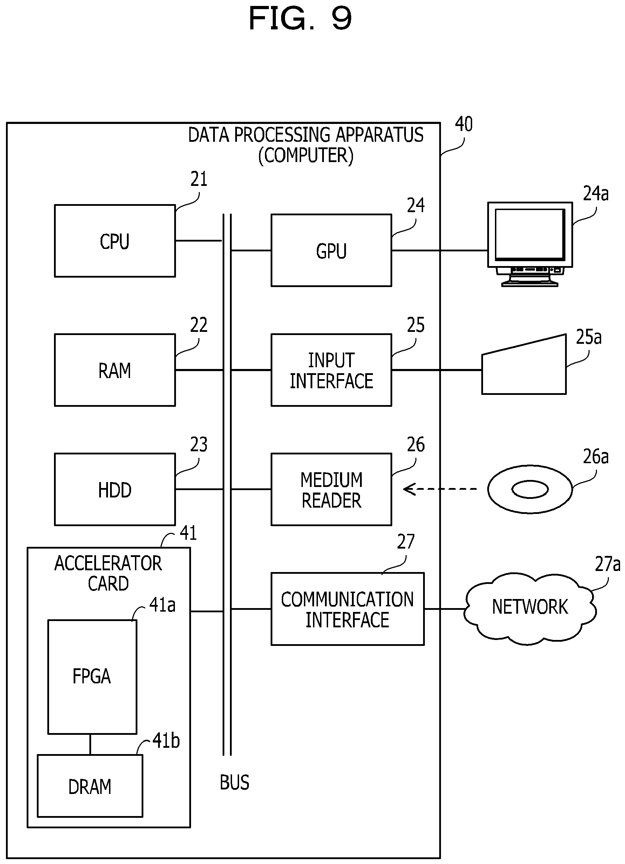

FIG. 9 is a diagram illustrating an example of a data processing apparatus according to the third embodiment. In FIG. 9, the same elements as the elements illustrated in FIG. 2 are assigned with the same reference signs.

A data processing apparatus 40 according to the third embodiment includes an accelerator card 41 coupled to a bus.

The accelerator card 41 is a hardware accelerator that searches for a solution of a combinatorial optimization problem. The accelerator card 41 includes an FPGA 41a and a DRAM 41b. There may be a plurality of accelerator cards 41.

For example, in the data processing apparatus 40 according to the third embodiment, the FPGA 41a performs at least part of the processing of the processing unit 12 illustrated in FIG. 1, at least part of the processing of the control unit 31 illustrated in FIG. 3, and the processing of the search unit 34. The DRAM 41b or a storage circuit (a static random-access memory (SRAM), a register, or the like) (not illustrated) in the FPGA 41a functions as the storage unit 11 illustrated in FIG. 1 and the storage unit 33 illustrated in FIG. 3.

Hereinafter, three examples of the FPGA 41a (hereinafter referred to as an FPGA 41a1, an FPGA 41a2, and an FPGA 41a3) will be described.

(First example)

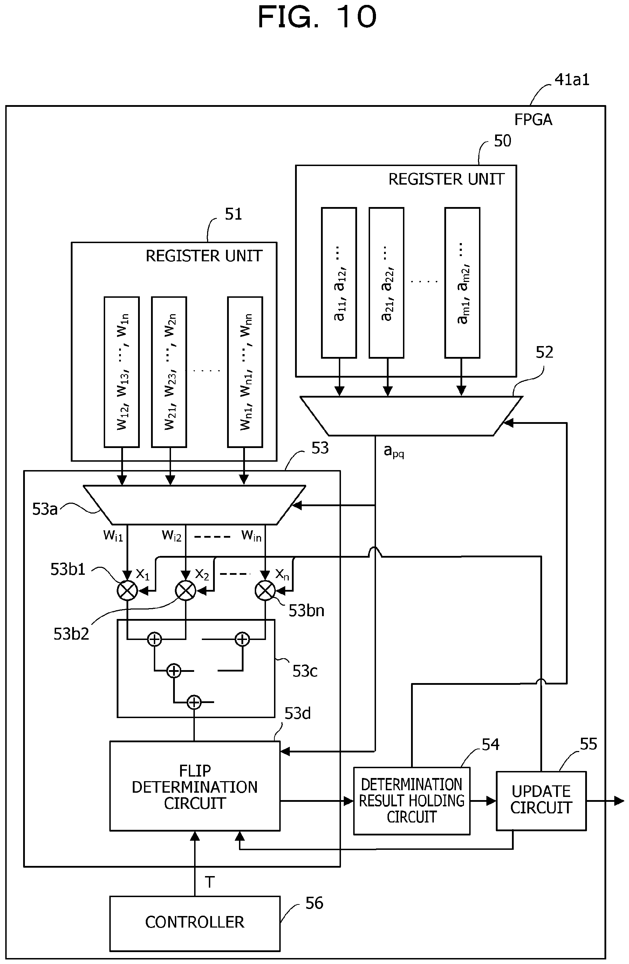

FIG. 10 is a diagram illustrating a first example of the FPGA.

The FPGA 41a1 includes register units 50 and 51, a selection circuit 52, a calculation circuit (hereinafter referred to as a Boltzmann machine circuit) 53, a determination result holding circuit 54, an update circuit 55, and a controller 56.

The register unit 50 includes a plurality of registers, and stores group information such as that illustrated in FIG. 4. For example, group information is generated by the CPU 21 illustrated in FIG. 9 performing the processing illustrated in FIGs. 5 to 7, and is stored in the register unit 50.

The register unit 51 includes a plurality of registers, and stores a weight value ($W_{ij}$). In the example of FIG. 10, it is $W_{ij} = 0$, which is not stored in the register unit 51.

Group information and weight values may be stored in the DRAM 41b, or may be stored in an SRAM (not illustrated) in the FPGA 41a1.

The selection circuit 52 sequentially selects and outputs $a_{pq}$ stored in the register unit 50. $a_{pq}$ is selected in order from the ones belonging to the same group. For example, identification numbers are selected in the order of $a_{11}$, $a_{12}$, ... for the first group. Once all the pieces of identification information of the state variables belonging to the first group have been selected, next, identification numbers are selected in the order of $a_{21}$, $a_{22}$, ... for the second group.

The Boltzmann machine circuit 53 includes a selection circuit 53a, multiplication circuits 53b1, 53b2, ..., and 53bn, an addition circuit unit 53c, and a flip determination circuit 53d.

The selection circuit 53a selects the weight values to be read from the register unit 51 in accordance with $a_{pq}$ output by the selection circuit 52. FIG. 10 illustrates an example of weight values to be read when $a_{pq} = i$. When $a_{pq} = i$, the selection circuit 53a selects and outputs $W_{i1}$, $W_{i2}$, ..., and $W_{in}$.

The multiplication circuits 53b1 to 53bn calculate $W_{ij}x_j$ of Formula (2). Each of the multiplication circuits 53b1 to 53bn outputs the product of one of the weight values output by the selection circuit 53a and the value of a corresponding state variable among the current values of n state variables ($x_1$ to $x_n$) output by the update circuit 55. For example, in a case where the selection circuit 53a selects and outputs $W_{i1}$ to $W_{in}$, the multiplication circuit 53b1 outputs the product of $W_{i1}$ and $x_1$, the multiplication circuit 53b2 outputs the product of $W_{i2}$ and $x_2$, and the multiplication circuit 53bn outputs the product of $W_{in}$ and $x_n$.

The addition circuit unit 53c includes a plurality of addition circuits, and calculates a sum of $W_{ij}x_j$ of Formula (2) by adding the outputs of the multiplication circuits 53b1 to 53bn.

When an energy change amount of a case where the state variable with the identification number = $a_{pq}$ is flipped is smaller than a noise value, the flip determination circuit 53d outputs a determination result indicating that flipping is allowed. When the change amount is equal to or larger than the noise value, the flip determination circuit 53d outputs a determination result indicating that flipping is not allowed.

For example, the flip determination circuit 53d includes a noise generation circuit that generates a noise value ($\log(rand) \times T$) based on the temperature parameter (T) supplied from the controller 56. rand is a uniform random number equal to or larger than 0 and equal to or smaller than 1. $\log(rand)$ may be stored as table data in a memory such as an SRAM. In this case, for example, $\log(rand)$ corresponding to rand generated by a random number generation circuit is read from the memory, multiplied by T, and used as a noise value.

The flip determination circuit 53d includes a circuit (for example, a register) that holds the bias coefficient ($b_i$ (i = 1 to n)) indicated in Formula (1) and Formula (2). The flip determination circuit 53d receives $a_{pq}$ from the selection circuit 52, and obtains a local field ($h_i$ of Formula (2)) by adding a bias coefficient identified by $a_{pq}$ to the sum of $W_{ij}x_j$

output by the addition circuit unit 53c. Depending on the problem, all bias coefficients may be 0.

The flip determination circuit 53d receives the current values of n state variables ($x_1$ to $x_n$) output by the update circuit 55, and determines $-\Delta x_i$ indicated in Formula (2) of a case where the state variable with the identification number = $a_{pq}$ is flipped. When the current value of the state variable with the identification number = $a_{pq}$ is 1, $-\Delta x_i$ is 1. When the current value is 0, $-\Delta x_i$ is -1. When the current value of the state variable with the identification number = $a_{pq}$ is 1, the flip determination circuit 53d uses a local field as an energy change amount. When the current value is 0, the flip determination circuit 53d uses a value obtained by inverting the sign of the local field as the energy change amount.

The determination result holding circuit 54 holds the determination result output by the flip determination circuit 53d. The determination result holding circuit 54 holds in advance the number of state variables belonging to each group obtained by the grouping processing ($n_p$ described above). Based on $n_p$, the determination result holding circuit 54 determines whether or not the determination results are held for all the state variables belonging to the group being processed.

When it is determined that the determination results are not held for all the state variables belonging to the group, the determination result holding circuit 54 causes the selection circuit 52 to select $a_{pq}$ representing the identification number of the next state variable belonging to the group, every time the flip determination circuit 53d outputs a determination result. When it is determined that the determination results are held for all the state variables belonging to the group, the determination result holding circuit 54 supplies the determination results to the update circuit 55. At this time, the determination result holding circuit 54 causes the selection circuit 52 to select $a_{pq}$ representing the identification number of the first state variable among the identification numbers of a plurality of state variables belonging to the next group.

The update circuit 55 includes a circuit (for example, a register) that holds the values of n state variables ($x_1$ to $x_n$) and a circuit that inverts any one value or a plurality of values of the values of n state variables from 0 to 1 or from 1 to 0 in order to perform flipping. When receiving, from the determination result holding circuit 54, the determination results for all the state variables belonging to a certain group, the update circuit 55 flips all the state variables that are allowed to be flipped in the group based on the determination results. When there are a plurality of state variables that are allowed to be flipped, the update circuit 55 may flip the state variables in parallel. The update circuit 55 outputs the current values of n state variables ($x_1$ to $x_n$).

The controller 56 controls the value of T, operation timing of each unit of the FPGA 41a1, and the like.

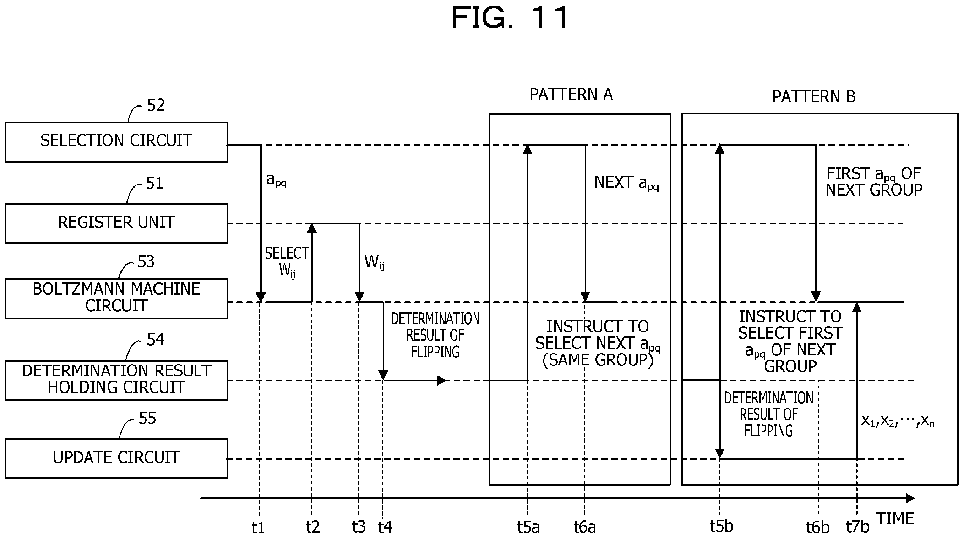

FIG. 11 is a timing diagram illustrating an example of operation timing of each unit of the FPGA.

When one $a_{pq}$ of a certain group is supplied from the selection circuit 52 to the Boltzmann machine circuit 53 (timing t1), the Boltzmann machine circuit 53 selects $W_{ij}$ to be read from the register unit 51 in accordance with $a_{pq}$ (timing t2), and reads $W_{ij}$ (timing t3). The Boltzmann machine circuit 53 performs flip determination, and transmits a determination result to the determination result holding circuit 54 (timing t4).

When the determination result is not for the last state variable belonging to a certain group, the operation of pattern A is performed. When the determination result is for the last state variable belonging to a certain group, the operation of pattern B is performed.

In the operation of pattern A, the determination result holding circuit 54 instructs the selection circuit 52 to select the next $a_{pq}$ ($a_{pq}$ representing the identification number of the next state variable belonging to the same group) (timing t5a), and the Boltzmann machine circuit 53 receives that $a_{pq}$ (timing t6a). After that, operation similar to that at timing t2 to timing t4 is performed.

On the other hand, in the operation of pattern B, the determination result holding circuit 54 instructs the selection circuit 52 to select the first $a_{pq}$ of the next group ($a_{pq}$ representing the identification number of the first state variable among the identification numbers of a plurality of state variables belonging to the next group) (timing t5b). The Boltzmann machine circuit 53 receives that $a_{pq}$ (timing t6b). At timing t5b, the determination result holding circuit 54 supplies, to the update circuit 55, the determination results for all the state variables belonging to the group currently being processed. Based on the determination results, the update circuit 55 flips all the state variables that are allowed to be flipped in the group, and supplies the current values (or updated values in a case where the flipping is performed) of $x_1$ to $x_n$ to the Boltzmann machine circuit 53 (timing t7b). Of $x_1$ to $x_n$, the values of state variables belonging to groups other than the group currently being processed do not change. After that, operation similar to that at timing t2 to timing t4 is performed.

Under the control of the controller 56, the above operation is repeated. When the simulated annealing method is performed, the controller 56 decreases the value of T every predetermined number of times of flip determination. For example, the controller 56 causes the update circuit 55 to output, as calculation results of a combinatorial optimization problem, the values of $x_1$ to $x_n$ obtained when the number of times of flip determination has reached a predetermined number of times. Under the control of the CPU 21, the output values of $x_1$ to $x_n$ are output to the outside of the data processing apparatus 40 (for example, displayed on the display 24a).

Every time flipping occurs, the controller 56 may update the value (energy) of the evaluation function represented by Formula (1), and cause a storage circuit such as a register to store the energy and the state obtained when the energy is the minimum energy up to that time. In this case, the controller 56 may output, as calculation results, the values of $x_1$

to $x_n$ corresponding to the minimum energy stored when the number of times of flip determination has reached a predetermined number of times.

In the data processing apparatus 40 described above, similar effects to those of the data processing apparatus 10 according to the first embodiment may be obtained. For example, after flipping is allowed in flip determination by the flip determination circuit 53d, a plurality of state variables belonging to the same group for which the absolute value of the weight value is equal to or smaller than $\varepsilon$ are simultaneously flipped in the update circuit 55 without the flipping being rejected. For this reason, since useless calculation does not occur, calculation time may be shortened. Since useless calculation does not occur, energy efficiency at the time of calculation is improved, and power consumption for calculation may be reduced.

Although in the above example, every time the flip determination circuit 53d outputs a determination result, the determination result holding circuit 54 of the FPGA 41a1 in FIG. 10 outputs a selection signal that causes the selection circuit 52 to select the next $a_{pq}$, this is not the only case. For example, the controller 56 may cause the selection circuit 52 to output $a_{pq}$ of a plurality of state variables belonging to the same group at a predetermined cycle (for example, a clock cycle) without waiting for the flip determination circuit 53d to output a determination result. Accordingly, product-sum operation processing and flip determination processing for a plurality of state variables belonging to the same group may be performed in parallel, and calculation time may be further shortened.

(Second example)

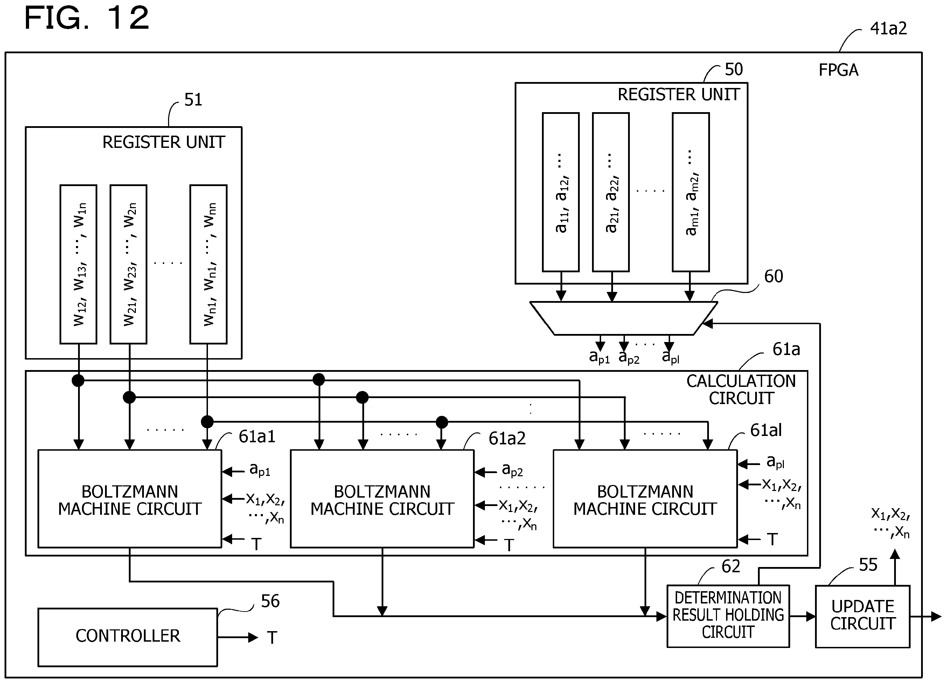

FIG. 12 is a diagram illustrating a second example of the FPGA. In FIG. 12, the same elements as the elements illustrated in FIG. 10 are assigned with the same reference signs.

A calculation circuit 61a of the FPGA 41a2 of the second example includes a plurality of circuit units (hereinafter referred to as Boltzmann machine circuits 61a1, 61a2, ..., and 61al). Each of the Boltzmann machine circuits 61a1 to 61al has the same circuit configuration as the Boltzmann machine circuit 53 illustrated in FIG. 10.

A selection circuit 60 selects $a_{pq}$ representing identification numbers of state variables belonging to a certain group by a number equal to that of the Boltzmann machine circuits 61a1 to 61al at a maximum, and reads the $a_{pq}$ from the register unit 50.

In the example of FIG. 12, as $a_{pq}$ representing identification numbers of state variables belonging to a certain group, l $a_{p1}$, $a_{p2}$, ..., and $a_{pl}$ are selected and supplied to the Boltzmann machine circuits 61a1 to 61al. In the example of FIG. 12, $a_{p1}$ is supplied to the Boltzmann machine circuit 61a1, $a_{p2}$ is supplied to the Boltzmann machine circuit 61a2, and $a_{pl}$ is supplied to the Boltzmann machine circuit 61al.

Each of the Boltzmann machine circuits 61a1 to 61al performs flip determination for the state variable identified by the supplied $a_{pq}$, and outputs a determination result.

A determination result holding circuit 62 holds the determination result output from each of the Boltzmann machine circuits 61a1 to 61al. The determination result holding circuit 62 holds in advance the number of state variables belonging to each group ($n_p$ described above).

Based on $n_p$, the determination result holding circuit 62 determines whether or not the determination results for all the state variables belonging to the group being processed are held. When it is determined that the determination results for all the state variables belonging to the group being processed are not held, the selection circuit 60 is caused to select a maximum of l $a_{pq}$ representing identification numbers for identifying the remaining state variables belonging to the group.

When it is determined that the determination results for all the state variables belonging to the group being processed are held, the determination result holding circuit 62 supplies the determination results to the update circuit 55. At this time, the determination result holding circuit 62 causes the selection circuit 60 to select a maximum of l $a_{pq}$ from $a_{pq}$ representing the identification number of the first state variable among the identification numbers of a plurality of state variables belonging to the next group.

As described above, by providing the plurality of Boltzmann machine circuits 61a1 to 61al, flip determination for state variables belonging to the same group may be performed in parallel, and calculation time may be further shortened.

(Third example)

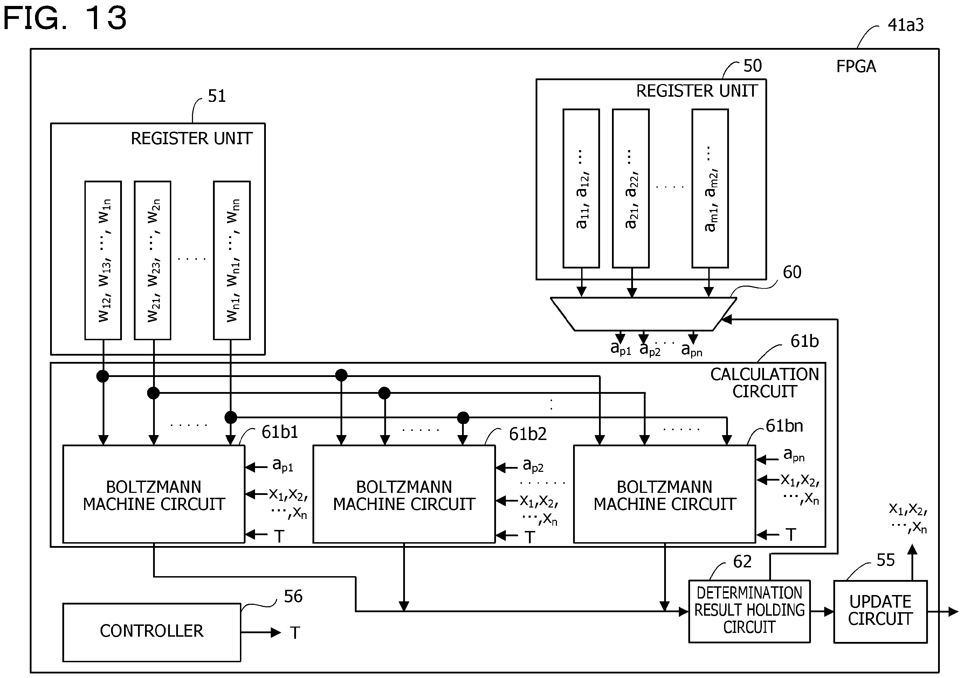

FIG. 13 is a diagram illustrating a third example of the FPGA. In FIG. 13, the same elements as the elements illustrated in FIG. 12 are assigned with the same reference signs.

Although the FPGA 41a3 of the third example is substantially the same as the FPGA 41a2 of the second example, a calculation circuit 61b includes the same number of Boltzmann machine circuits 61b1, 61b2, ..., and 61bn as all state variables ($x_1$ to $x_n$) included in an evaluation function. Each of the Boltzmann machine circuits 61b1 to 61bn has the same circuit configuration as the Boltzmann machine circuit 53 illustrated in FIG. 10.

Since the number of state variables belonging to each group is smaller than n, some of the Boltzmann machine circuits 61b1 to 61bn (for example, the Boltzmann machine circuit 61bn that performs processing for the state variable identified by $a_{pn}$) are not used. However, by providing the n Boltzmann machine circuits 61b1 to 61bn, even when the number of state variables belonging to each group is large, all of the state variables may be processed in parallel. For this reason, calculation time may be further shortened.

Although aspects of the data processing apparatus, the data processing method, and the program of the present disclosure have been described thus far based on the embodiments, these are merely examples.

For example, the following modification is also possible.

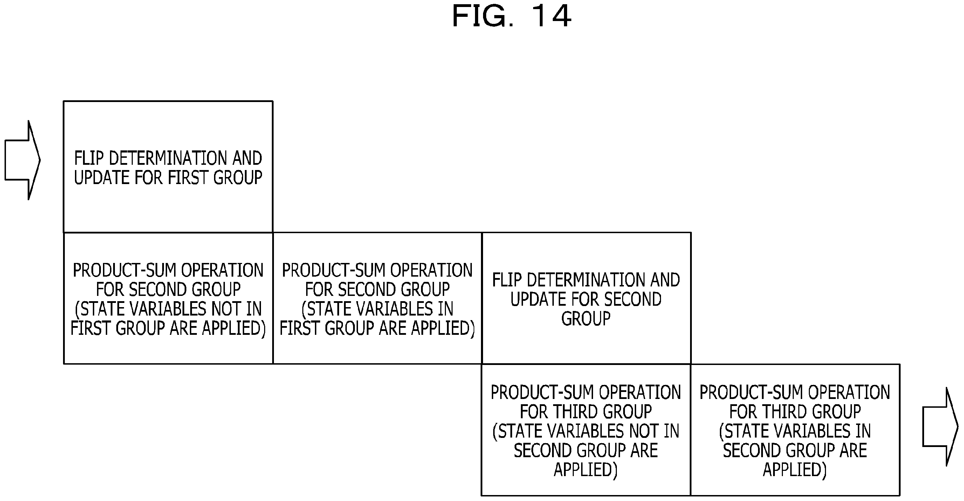

FIG. 14 is a diagram illustrating a modification example of the data processing method.

In the example of FIG. 14, while flip determination and update for the first group are being performed, product-sum operation for the second group may be performed by applying state variables that are not in the first group.

For example, when flip determination and update processing for the first group is performed by the flip determination circuit 53d, the determination result holding circuit 54, and the update circuit 55 of FIG. 10, the values of state variables belonging to the other groups do not change. For this reason, the multiplication circuits 53b1 to 53bn and the addition circuit unit 53c may perform product-sum operation for the second group by applying the state variables that are not in the first group.

Since the values of state variables in the first group are determined when the flip determination and update for the first group are completed, product-sum operation for the second group is performed by applying the state variables in the first group. Flip determination and update for the second group are performed. Also during this time, product-sum operation for the third group may be performed by applying the state variable that is not in the second group. Since the values of state variables in the second group are determined when the flip determination and update for the second group are completed, product-sum operation for the third group is performed by applying the state variables in the second group.

Accordingly, calculation time may be further shortened.

Besides this, various modifications are possible.

**Claims**

1. A data processing apparatus that searches for a combination of values of a plurality of state variables by which a value of an Ising-type evaluation function including the plurality of state variables and a weight value indicating a degree of interaction between the plurality of state variables is local minimum or local maximum, the data processing apparatus comprising:

    a storage unit configured to store group information indicating to which of a plurality of groups obtained by grouping the plurality of state variables such that an absolute value of the weight value is equal to or smaller than a threshold value each of the plurality of state variables belongs; and
    a processing unit configured to:

       execute first processing of determining whether to allow a change in a value of each of a plurality of first state variables that belong to a first group and is selected based on the group information from among the plurality of state variables, based on a comparison result between a predetermined value and a change amount of a value of the evaluation function in a case where a value of each of the plurality of first state variables is changed, and
       execute, when it is determined in the first processing that a change in values of a plurality of second state variables among the plurality of first state variables is allowed, second processing of changing values of the plurality of second state variables.

2. The data processing apparatus according to claim 1,
    wherein the processing unit searches for the combination of the values of the plurality of state variables by which the value of the evaluation function is the local minimum or the local maximum by executing the first processing and the second processing after changing a group that is the first group among the plurality of groups.

3. The data processing apparatus according to claim 1 or 2,
    wherein the predetermined value is a noise value obtained based on a random number and a value of temperature parameter.

4. The data processing apparatus according to any one of claims 1 to 3,

wherein the processing unit includes

a selection circuit that selects an identification number for identifying each of the plurality of first state variables from the group information stored in the storage unit,

a calculation circuit that calculates the change amount for each of the plurality of first state variables based on the weight value selected based on the selected identification number and values of the plurality of state variables, and determines whether to allow a change in value for each of the plurality of first state variables based on a comparison result between the change amount and the predetermined value,

a holding circuit that holds a determination result of the calculation circuit, and

an update circuit that changes values of the plurality of second state variables when the holding circuit holds the determination result for each of the plurality of first state variables.

5. The data processing apparatus according to claim 4,
   wherein the calculation circuit includes a plurality of circuit units, and the first processing for a same number of state variables as a number of the plurality of circuit units among the plurality of first state variables is performed by the plurality of circuit units in parallel.

6. The data processing apparatus according to claim 5,
   wherein the plurality of circuit units are provided in a same number as a number of the plurality of state variables.

7. A data processing method that searches for a combination of values of a plurality of state variables by which a value of an Ising-type evaluation function including the plurality of state variables and a weight value indicating a degree of interaction between the plurality of state variables is local minimum or local maximum, the data processing method comprising:

   storing group information indicating to which of a plurality of groups obtained by grouping the plurality of state variables such that an absolute value of the weight value is equal to or smaller than a threshold value each of the plurality of state variables belongs;

   executing first processing of determining whether to allow a change in a value of each of a plurality of first state variables that belong to a first group and is selected based on the group information from among the plurality of state variables, based on a comparison result between a predetermined value and a change amount of a value of the evaluation function in a case where a value of each of the plurality of first state variables is changed; and

   executing, when it is determined in the first processing that a change in values of a plurality of second state variables among the plurality of first state variables is allowed, second processing of changing values of the plurality of second state variables.

8. A program in which a computer that searches for a combination of values of a plurality of state variables by which a value of an Ising-type evaluation function including the plurality of state variables and a weight value indicating a degree of interaction between the plurality of state variables is local minimum or local maximum to execute a process executes performs processing of:

   reading group information from a memory that stores the group information indicating to which of a plurality of groups obtained by grouping the plurality of state variables such that an absolute value of the weight value is equal to or smaller than a threshold value each of the plurality of state variables belongs;

   executing first processing of determining whether to allow a change in a value of each of a plurality of first state variables that belong to a first group and is selected based on the group information from among the plurality of state variables, based on a comparison result between a predetermined value and a change amount of a value of the evaluation function in a case where a value of each of the plurality of first state variables is changed; and

   executing, when it is determined in the first processing that a change in values of a plurality of second state variables among the plurality of first state variables is allowed, second processing of changing values of the plurality of second state variables.

9. The program according to claim 8, wherein the processing is further includes:

   generating the group information; and
   storing the group information into the memory.

**10.** The program according to claim 9, wherein the processing is further includes:

determining, when the plurality of groups include a second group to which a plurality of third state variables belong and a third group to which one or more fourth state variables less than the number of the plurality of third state variables belong, whether or not an absolute value of a weight value between a third state variable of the plurality of third state variables and each of the one or more fourth state variables is equal to or less than the threshold value, and

moving, when an absolute value of a weight value between a third state variable and the one or more fourth state variables is equal to or less than the threshold value, the third state variables to the third group.

**11.** The program according to claim 9 or 10, wherein the processing is further includes:

increasing, when a minimum value of state variables belongs to each of the plurality of groups is smaller than a lower limit value, the threshold value; and

executing processing of the generating after the increasing.

# FIG. 1

GROUPING OF ALL STATE VAROABLES

15a1

$a_{11}, a_{12}\cdots$

$|W_{ij}| \le \varepsilon$

15a2

$a_{21}, a_{22}\cdots$

$|W_{ij}| \le \varepsilon$

. . . . . . .

15am

$a_{m1}, a_{m2}\cdots$

$|W_{ij}| \le \varepsilon$

10

DATA PROCESSING APPARATUS

STORAGE UNIT

11

$a_{11}, a_{12}\cdots$

$a_{21}, a_{22}\cdots$

. . . . . . .

$a_{m1}, a_{m2}\cdots$

12

PROCESSING UNIT

| PERFORM FLIP DETERMINATION FOR EACH STATE VARIABLE BELONGING TO CERTAIN GROUP | S1 |

| FLIP ALL STATE VARIABLES THAT MAY ACCEPT FLIPPING | S2 |

| CHANGE GROUP | S3 |

# FIG. 2

DATA PROCESSING APPARATUS (COMPUTER) 20

21 CPU

24 GPU — 24a

22 RAM

25 INPUT INTERFACE — 25a

23 HDD

26 MEDIUM READER — 26a

27 COMMUNICATION INTERFACE — NETWORK 27a

BUS

# FIG. 3

# FIG. 4

GROUP INFORMATION

| | |
|---|---|
| FIRST GROUP<br>(n1 STATE VARIABLES) | $a_{11}\ a_{12}\ \ldots\ldots a_{1q}\ \ldots\ldots$ |
| SECOND GROUP<br>(n2 STATE VARIABLES) | $a_{21}\ a_{22}\ \ldots\ldots a_{2q}\ \ldots\ldots$ |
| p-TH GROUP<br>(np STATE VARIABLES) | $a_{p1}\ a_{p2}\ \ldots\ldots a_{pq}\ \ldots\ldots$ |
| m-TH GROUP<br>(nm STATE VARIABLES) | $a_{m1}\ a_{m2}\ \ldots\ldots a_{mq}\ \ldots\ldots$ |

# FIG. 5

```
           START GROUPING

                 ↓
        RECEIVE INPUT              S10

                 ↓
   d₁ = 1, d₁ = 0 (2 ≤ i ≤ n)      S11
   m = 1, nₘ = 1, aₘ,ₙₘ = 1

                 ↓
             i=2                   S12

                 ↓                S13
            ⟨ dᵢ=0? ⟩  —— NO ——→
                 │ YES
                 ↓
             p=0                   S14

                 ↓
            p=p+1                  S15

                 ↓                S16
         ⟨ p ≤ m? ⟩  —— NO ——→    S17
                 │ YES      m=m+1, nₘ=1, aₘ,ₙₘ=i, dᵢ=1
                 ↓
    NO  ⟨ F_ε(a_pq,i)==1? ⟩       S18
                 │ YES
                 ↓                 S19
      nₚ=nₚ+1, a_p,np=i, dᵢ=1

                 ↓
            i=i+1                  S20

                 ↓                S21
    NO  ⟨ i==n? ⟩
                 │ YES
                 ↓
          END GROUPING
```

# FIG. 6

```
        ┌─────────────────────────┐
        │   START CORRECTION OF   │
        │        GROUPING         │
        └─────────────────────────┘
                    │
                    ▼
        ┌─────────────────────────┐
        │          s=m            │──── S30
        └─────────────────────────┘
                    │
                    ▼
        ┌─────────────────────────┐
        │       u=r_s, z=1        │──── S31
        └─────────────────────────┘
                    │
                    ▼
        ┌─────────────────────────┐
        │          t=1            │──── S32
        └─────────────────────────┘
                    │
                    ▼
        ┌─────────────────────────┐
        │          v=r_t          │──── S33
        └─────────────────────────┘
                    │
                    ▼      S34
              ◇─────────────◇      YES
              │ F_ε(a_uz,a_vy)==1? │────────┐
              ◇─────────────◇               │
                    │ NO   S35              ▼
                    ▼                  ┌──────────────────────┐  S41
        ┌─────────────────────────┐   │ MOVE a_uz FROM GROUP │
        │         t=t+1           │   │    u TO GROUP v      │
        └─────────────────────────┘   └──────────────────────┘
                    │      S36                  │          S42
       YES    ◇─────────────◇            ┌──────────────────────┐
        ┌─────│    t<s?     │            │ ORDER BY NUMBER OF   │
        │     ◇─────────────◇            │   STATE VARIABLES    │
        │           │ NO   S37           └──────────────────────┘
        │           ▼                           │          S43
        │ ┌─────────────────────────┐     ◇──────────────────────◇
        │ │         z=z+1           │     │ n_g - n_h ≤ 1         │  NO
        │ └─────────────────────────┘     │ (g = r_m, h = r_1)?   │──┐
        │           │      S38            │ OR HAS PROCESSING BEEN │  │
        │ YES  ◇─────────────◇            │ REPEATED SPECIFIED     │  │
        └─────│   z<n_u+1?   │            │ NUMBER OF TIMES?       │  │
              ◇─────────────◇            ◇──────────────────────◇  │
                    │ NO   S39                  │ YES                │
                    ▼                                                │
        ┌─────────────────────────┐                                 │
        │         s=s-1           │                                 │
        └─────────────────────────┘                                 │
                    │      S40                                       │
       YES    ◇─────────────◇                                       │
        ┌─────│    s>1?      │                                       │
        │     ◇─────────────◇                                       │
        │           │ NO                                             │
        │           ▼                                                │
        │   ┌─────────────────────────┐                             │
        │   │   END CORRECTION OF     │                             │
        │   │        GROUPING         │                             │
        │   └─────────────────────────┘                             │
```

# FIG. 7

START THRESHOLD
DETERMINATION PROCESSING

$\varepsilon = 0$ — S50

GROUPING PROCESSING — S51

S52

IS MINIMUM
VALUE OF NUMBER OF
STATE VARIABLES IN GROUP
EQUAL TO OR LARGER THAN
LOWER LIMIT VALUE?

NO

S53

$\varepsilon = \varepsilon + 1$

S54

$\varepsilon > \max(|W_{ij}|)$?

NO

YES

YES

END (SUCCESS)

END (FAILURE)

# FIG. 8

START

ACQUIRE $a_{pq}$ ($1 \leq q \leq n_p$, $1 \leq p \leq m$) — S60

$p = 1$ — S61

$q = 1$ — S62

PERFORM FLIP DETERMINATION OF STATE VARIABLE WITH IDENTIFICATION NUMBER $a_{pq}$ — S63

$q = q+1$ — S64

$q == n_p + 1?$ — S65
NO
YES

EXECUTE FLIPPING — S66

$p = p+1$ — S67

$p == m+1?$ — S68
NO
YES

IS NUMBER OF TIMES OF FLIP DETERMINATION CHANGE CYCLE OF T? — S69
NO
YES

CHANGE T — S70

NUMBER OF TIMES OF FLIP DETERMINATION $\geq$ N? — S71
NO
YES

OUTPUT CALCULATION RESULT — S72

END

# FIG. 9

DATA PROCESSING APPARATUS
(COMPUTER)    40

21    CPU

GPU    24    24a

22    RAM

INPUT
INTERFACE    25    25a

23    HDD

MEDIUM
READER    26    26a

41    ACCELERATOR
CARD

COMMUNICATION
INTERFACE    27    NETWORK    27a

41a    FPGA

41b    DRAM

BUS

24

# FIG. 10

# FIG. 11

EP 4 099 227 A1

# FIG. 12

EP 4 099 227 A1

# FIG. 13

# FIG. 14

| | | | |
|---|---|---|---|
| FLIP DETERMINATION AND UPDATE FOR FIRST GROUP | | | |
| PRODUCT-SUM OPERATION FOR SECOND GROUP (STATE VARIABLES NOT IN FIRST GROUP ARE APPLIED) | PRODUCT-SUM OPERATION FOR SECOND GROUP (STATE VARIABLES IN FIRST GROUP ARE APPLIED) | FLIP DETERMINATION AND UPDATE FOR SECOND GROUP | |
| | | PRODUCT-SUM OPERATION FOR THIRD GROUP (STATE VARIABLES NOT IN SECOND GROUP ARE APPLIED) | PRODUCT-SUM OPERATION FOR THIRD GROUP (STATE VARIABLES IN SECOND GROUP ARE APPLIED) |

EP 4 099 227 A1

**EUROPEAN SEARCH REPORT**

Application Number

EP 22 15 7026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 722 941 A1 (FUJITSU LTD [JP]) 14 October 2020 (2020-10-14) * the whole document * | 1-11 | INV. G06N3/04 G06N3/063 |
| A | BAGHERBEIK MOHAMMAD ET AL: "A Permutational Boltzmann Machine with Parallel Tempering for Solving Combinatorial Optimization Problems", 31 August 2020 (2020-08-31), ARXIV.ORG, CORNELL UNIVERSITY LIBRARY, 201 OLIN LIBRARY CORNELL UNIVERSITY ITHACA, NY 14853, PAGE(S) 317 - 331, XP047560373, [retrieved on 2020-08-31] * figures 1-4 * * algorithm 1 * * sections 2-4 * | 1-11 | |
| A | YAMAMOTO KASHO ET AL: "STATICA: A 512-Spin 0.25M-Weight Annealing Processor With an All-Spin-Updates-at-Once Architecture for Combinatorial Optimization With Complete Spin-Spin Interactions", IEEE JOURNAL OF SOLID-STATE CIRCUITS, IEEE, USA, vol. 56, no. 1, 13 October 2020 (2020-10-13), pages 165-178, XP011827743, ISSN: 0018-9200, DOI: 10.1109/JSSC.2020.3027702 [retrieved on 2020-12-23] * figures 3-12 * * algorithm 1 * * sections III, IV * | 1-11 | |

TECHNICAL FIELDS SEARCHED (IPC)

G06N

-/--

The present search report has been drawn up for all claims

| Place of search | Date of completion of the search | Examiner |
|---|---|---|
| The Hague | 12 August 2022 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 22 15 7026

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MATSUBARA SATOSHI ET AL: "Digital Annealer for High-Speed Solving of Combinatorial optimization Problems and Its Applications", 2020 25TH ASIA AND SOUTH PACIFIC DESIGN AUTOMATION CONFERENCE (ASP-DAC), IEEE, 13 January 2020 (2020-01-13), pages 667-672, XP033746210, DOI: 10.1109/ASP-DAC47756.2020.9045100 [retrieved on 2020-03-23] * figure 1 * * section II * | 1-11 | |

TECHNICAL FIELDS
SEARCHED        (IPC)

The present search report has been drawn up for all claims

| Place of search | Date of completion of the search | Examiner |
|---|---|---|
| The Hague | 12 August 2022 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 15 7026

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2022

| Patent document cited in search report | | Publication date | Patent family member(s) | | Publication date |
|---|---|---|---|---|---|
| EP 3722941 | A1 | 14-10-2020 | CN | 111812972 A | 23-10-2020 |
| | | | EP | 3722941 A1 | 14-10-2020 |
| | | | JP | 2020173661 A | 22-10-2020 |
| | | | US | 2020326673 A1 | 15-10-2020 |

EPO FORM P0459

**REFERENCES CITED IN THE DESCRIPTION**

**Patent documents cited in the description**

• JP 2017219952 A